# EUROPEAN PATENT APPLICATION

(11) **EP 3 447 768 A1**
(43) Date of publication of application: **27.02.2019**
(21) Application number: 17187133.8
(22) Date of filing: 21.08.2017
(51) Int. Cl.: G10L 25/21, G10L 15/22, H04W 4/16

(54) **METHOD OF TRANSFERRING A CALL, USER DEVICE AND A COMPUTER PROGRAM**

(71) Applicant: Vestel Elektronik Sanayi ve Ticaret A.S., 45030 Manisa (TR)
(72) Inventor: ÇUBUKÇU, Baran, 45030 Manisa (TR)
(74) Representative: Flint, Adam

(57) **Abstract**

There is provided a method, user device (106A) and computer program for transferring a call from a first user device (106A) to a second user device (106B). The call is initially conducted between the first user device (106A) and a third user device (108). The method comprises detecting a user's speech at the first user device (106A) and at the second user device (106B). If the user' speech is detected being as loudest at the second user device (1068) the call is transferred from the first user device (106A) to the second user device (106B) such that the call with the third user device (108) is continued between the second user device (106B) and the third user device (108). The user device (106A) comprises a processor for executing the method. The method steps are defined by a computer program stored in memory.

## Description

### Technical Field

The present disclosure relates to a method of transferring a call from a first user device to a second user device, a user device for conducting a call with a third party user device and a computer program.

### Background

Currently, there exist a variety of different user devices that can be used to conduct voice calls. A user may have access to any number of these devices. In some situations, a user may wish to transfer an ongoing call from one device to a different one of their devices. Usually, a user is required to interact with a physical button or a menu displayed at their current device, in order to transfer the call to a different device. This tends to result in an interruption to the conversation. Such an interruption is undesirable, especially if the conversation is of a time-sensitive nature.

### Summary

According to a first aspect disclosed herein, there is provided a method of transferring a call from a first user device to a second user device, the call initially being conducted between the first user device and a third user device, the method comprising: detecting a user's speech at the first user device; detecting the user's speech at the second user device; determining whether the user's speech is detected as loudest at the first user device or the second user device; and if the user's speech is detected as loudest at the second user device, causing the call to be transferred from the first user device to the second user device such that the call with the third user device is continued between the second user device and the third user device.

In an example, determining whether the user's speech is detected as loudest at the first user device or the second user device comprises determining an amplitude of the user's speech detected at the first user device relative to ambient noise detected at the first user device and determining an amplitude of the user's speech detected at the second user device relative to ambient noise detected at the second user device.

In an example, the user's speech is determined as loudest at the second user device if the difference between the amplitude of the user's speech detected at the second user device relative to the ambient noise detected at the second user device and the amplitude of the user's speech detected at the first user device relative to the ambient noise detected at the first user device is greater than a threshold difference.

In an example, the method comprises transmitting a sample of the user's speech from the first user device to the second user device; wherein the detecting the user's speech at the second user device is based on the sample of the user's speech received from the first user device.

In an example, the method comprises detecting movement of the second user device; and transferring the call from the first user device to the second user device based on the detected movement of the second user device and the user's speech being detected as loudest at the second user device.

In an example, the method comprises transferring the call from the first user device to the second user device if the second user device is detected as having been moved close to the user's ear.

In an example, one of the first user device and the second user device comprises a smartwatch device and the other of the first user device and the second user device comprises a portable mobile device.

In an example, detecting the user's speech at the second user device comprises detecting the user's speech at an external microphone that is connected to the second user device via a wired or wireless connection.

According to a second aspect, there is provided a user device for conducting a call with a third party user device, the user device comprising: a microphone; a communication interface configured to establish a local wireless connection with a second user device and to receive a measurement of the user's speech detected at the second user device via the wireless connection; and a processor configured to: generate a measurement of the user's speech received via the microphone; receive a measurement of the user's speech from the second user device; and if the user's speech is detected as loudest at the second user device, transfer the call to the second user device to enable the call with the third user device to be continued between second the user device and the third user device.

In an example, the processor is configured to: determine a frequency response of the user's voice; and cause the frequency response to be transmitted to the second user device as voice information via the local wireless connection to enable the second user device to distinguish the user's speech from ambient noise.

In an example, the communication interface is arranged to receive a measurement comprising an amplitude of the user's speech detected at the second user device relative to ambient noise detected at the second user device; and the processor is configured to: generate a measurement of the user's speech by determining an amplitude of the user's speech received via the microphone relative to ambient noise received via the microphone; and detect the user's speech as being loudest at the second user device if the difference between the amplitude of the user's speech detected at the second user device relative to ambient noise detected at the second user device and the amplitude of the user's speech received via the microphone relative to ambient noise received via the microphone is greater than a threshold difference.

In an example, the communication interface is configured to receive a measurement of the user's speech detected at an external microphone that is connected to the second user device via a wired or wireless connection. The external microphone may form part of a headset that is connected to the second user device via the wired or wireless connection. The headset may include a pair of headphones. The headset may be wirelessly connected to the second user device via a Bluetooth connection.

In an example, the communication interface is arranged to receive motion data from the second user device, the motion data indicating a detected motion of the second user device; and wherein the processor is configured to cause the call to be transferred from the user device to the second user device if the second user device is detected as being moved close to the user's ear or mouth.

In an example, the communication interface is configured to establish a local wireless connection with the second user device via at least one of Bluetooth, Wi-Fi, infrared and ZigBee.

According to a third aspect, there is provided a computer program comprising program code means which when executed by a computing device implement the steps according to the first aspect.

### Brief Description of the Drawings

To assist understanding of the present disclosure and to show how embodiments may be put into effect, reference is made by way of example to the accompanying drawings in which:
Figure 1 shows schematically an example of a communication system for conducting a call between a first user and a second user; and
Figure 2 shows schematically a first user device and a second user device connected via a local wireless connection.

### Detailed Description

Voice calls may be conducted between two or more user devices via a communications network. The communications network may be, for example, a cellular network and/or or an Internet Protocol network. In some examples, the two or more user devices have respective communication client applications installed which enable the user devices to connect with one another over the communications network. The communication client application is responsible for receiving voice data from a remote user and playing it out to a near-end user. Similarly, the communication client application is responsible for capturing voice data from the near-end user for transmission to and playout by the remote user's device.

A variety of different user devices may be used to conduct voice calls. These include, for example, smartphones, laptops, personal computers, tablet computers, smartwatches, landline telephones, etc. At a particular instance in time, a user may have a preferred device for conducting a voice call. This preference may be based, for example, on the nature of the call and / or the practicality of taking the call on a particular device. If, for example, a user is driving then it may be impractical and illegal in at least some countries to conduct the call using a hand-held mobile device. If the user cannot use their mobile device in a hands-free manner, then the user may opt to take the call on a different device, such as a smartwatch device or some other hands-free device. The smartwatch or similar device may allow the user to conduct the call without interfering with the user's ability to drive, for example, by outputting received audio via a loudspeaker. Once the user has finished driving and steps out of the car or other vehicle, they may wish to continue the call using another device, such as a cellular or smart phone. The other device may for example allow the user to continue the call in a private manner, i.e. by outputting audio via the device's ear speaker instead of via a loudspeaker.

Conventionally, a user is required to manually interact with the first user device in order to transfer an ongoing call from the first user device to a second user device. This may involve, for example, the user having to click on a 'transfer' button displayed at the first user device. In some examples, a user may have to visually identify the second user device from a list of user devices that are shown as part of a menu displayed at the first user device. This can result in an interruption to the user's conversation whilst the user performs the necessary actions to transfer the call.

In examples described herein, a call is transferred from a first user device to a second user device, the call initially being conducted between the first user device and a third user device. A user's speech is detected at the first user device. The user's speech is detected at the second user device. If the user's speech is detected as loudest at the second user device, the call is transferred from the first user device to the second user device such that the call with the third user device is continued between the second user device and the third user device. This enables transfer of an ongoing call from a first user device to a second user device, whilst causing minimum interruption to the ongoing conversation. The second user device can automatically be identified as a preferred device for conducting and continuing the call.

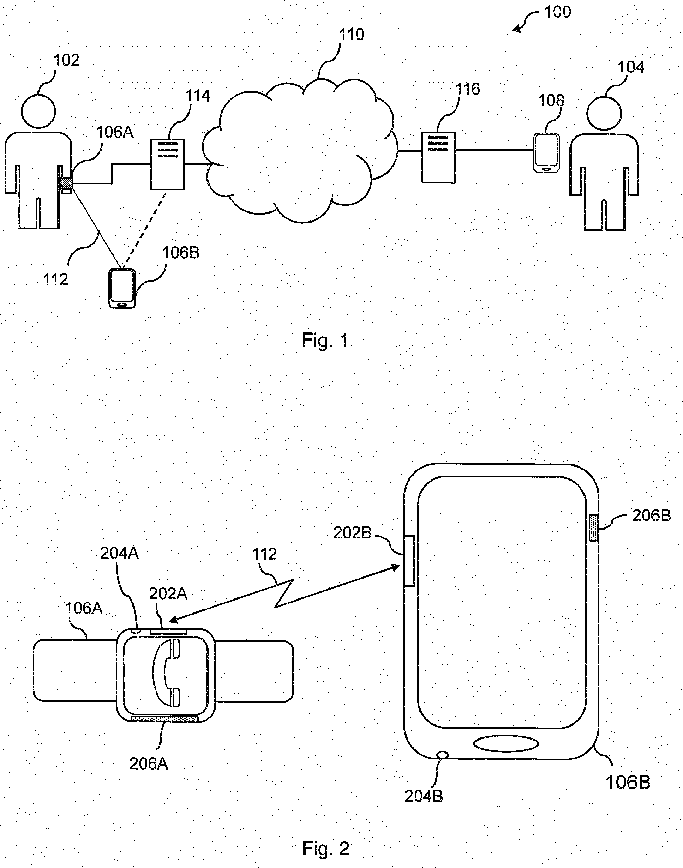

Figure 1 schematically shows an example of a communication system 100 for conducting a call between a first user 102 and second user 104 via respective user devices. The first user 102 is shown as being associated with a first user device 106A and a second user device 106B. By way of illustration, the first user device 106A may be for example a smartwatch and the second user device 106B may be for example a smartphone (or vice versa). The first user device 106A and second user device 106B are connected via a direct wireless connection 112.

The first user device 106A is in communication with a third user device 108 associated with a second user 104 via a communications network 110. The third user device 108 may be for example a smartphone or some other device able to conduct calls over the communications network 110. The communications network 110 may be for example a cellular network, configured in accordance with for example Long Term Evolution (LTE), or some other mobile access mechanism such as wideband code division multiple access (W-CDMA), CDMA2000, global system for mobile communications (GSM), general packet radio service (GPRS), LTE-Advanced (LTE-A) and/or the like. The first user device may connect to the cellular network via base station 114. Similarly, the third user device may connected to the cellular network via base station 116.

In the example shown in Figure 1, the first user device 106A and second user device 106B are each configured to detect a volume of the first user's speech, for example, using one or more microphones at the respective devices. The volume, i.e. loudness, of the first user's speech detected at the first user device 106A may be communicated to the second user device 106B via the direct wireless connection (and vice versa). The first user device 106A is configured to transfer the call from the first user device 106A to the second user device 106B if the first user's voice is detected as being louder at the second user device 106B than at the first user device 106A (optionally, louder by a threshold). This may occur, for example, as a result of the first user 102 moving the second user device 106B closer towards their mouth and speaking into the second user device 106B. The transfer of the call from the first user device 106A to the second user device 106B results in a connection being established between the second user device 106B and the third user device 108, via the communications network 110. In some examples, and depending on the nature of the communications network 110, this may involve dropping the connection between the first user device 106A and the second user device 108 in favour of a connection between the first user device 106A and the second user device 106B.

The audio captured at the respective microphone(s) of the first and second user devices may include a combination of the first user's speech and background or ambient noise. For example, if the first user 102 is driving a car then the audio captured at the respective devices may include the first user's speech and noise arising from e.g. the running engine, air conditioner, general road noise, etc. The first user device 106A may be configured to filter out the background or ambient noise from the first user's speech. This may achieved, for example, via speech recognition software installed at the first user device 106A. The ambient or background noise may be distinguished from the first user's speech by comparing the audio that is detected at first user device 106A when the first user 102 is speaking with the audio that is detected at the first user device 106A when the user 102 is not speaking.

Having identified a component of the audio that corresponds to the first user's speech, the first user device 106A in this example may be configured to determine a frequency response of the first user's voice. The frequency response may define a fundamental or basic frequency range that is characteristic of the first user's voice. This frequency response may be transmitted to the second user device 106B as voice information, via the local wireless connection 112. The second user device 106B may use this voice information to identify the first user's speech in audio that is detected at the second user device's microphone(s). In some examples, the first user device 106A may also transmit a measure of the ambient noise to the second user device 106B, so that the second user device 106B can identify ambient noise in the audio detected at its respective microphone(s).

The first user device 106A is configured to generate a respective measurement of the first user's speech. This measurement is generated in this example by determining an amplitude of the first user's speech detected at the first user device 106A relative to an amplitude of ambient noise detected at the first user device 106A. The respective determined amplitudes may correspond to a maximum amplitude or an average amplitude, for example. The measurement may be defined via a parameter. This parameter may be, for example, a ratio or fraction of the first user's speech relative to ambient noise. The parameter provides an indication of how loudly the first user 102 is detected as speaking at the first user device 106A. This in turn provides an indication of how close the first user device 106A is to the first user's mouth.

The second user device 106B is configured in this example to generate a corresponding measurement, based on an amplitude of the first user's speech detected at the second user device 106B and an amplitude of ambient noise detected at the second user device 106B. The second user device 106B transmits this measurement to the first user device 106A, via the local wireless connection 112. In some examples, the measurement corresponds to the parameter described previously, i.e. a ratio or fraction of the user's speech relative to ambient noise (but detected at the second user device).

The parameter enables the loudness of the first user's speech detected at the first user device 106A to be compared with the loudness of the first user's speech detected at the second user device 106B. In particular, the parameter allows for differences in the types of microphone used by the two user devices to be accounted for or accommodated. For example, if the user device 106A has a less sensitive microphone than the microphone at the second user device 106B, then this may lead to an artificial impression that the second user device 106B is located closest to the first user's mouth. In reality, the user 102 may be speaking into the first user device 106A but this speech may be detected with a smaller amplitude as a result of the less sensitive microphone. By looking at the ratio or fraction of the first user's speech relative to ambient noise detected at the first and second user devices, it can be determined which of the two devices the user is speaking into. This is because the user device that is located closest to the first user's mouth will detect a greater portion of the audio as comprising the first user's speech.

The first user device 106A compares the measurement generated at the first user device 106A with the measurement received from the second user device 106B. This enables the first user device 106A to determine whether the first user's speech is being detected most loudly at the first user device 106A or at the second user device 106B. In some examples, the second user device 106B also makes this determination based on a measurement received from the first user device 106A, and the audio detected at the second user device 106B.

In other examples, the second user device 106B makes this determination instead of the first user device 106A. For example, the first user device 106A may determine that it has insufficient processing resources available (at least temporarily) for determining at which of the two user devices the first user's speech is being detected most loudly. In such a case, the first user device 106A may transfer this responsibility to the second user device 106B. This may involve, for example, transmitting the measurement generated at the first user device 106A to the second user device 106B (via the wireless connection 112). The first user device 106A may also transmit an indication that the second user device 106B is to determine whether or not the call is to be transferred. The second user device 106B can then compare the measurement received from the first user device 106A with the measurement generated at the second user device 106B, and determine whether or not the call is to be transferred to the second user device 106B.

In some examples, the measurement received from the second user device 106B does not include the parameter, but rather the audio detected at the second user device 106B. In such an example, the first user device 106A processes the audio received from the second user device 106B in order to determine an amplitude of the first user's speech detected at the second user device 106B relative to ambient noise detected at the second user device 106B. This may be the case, where, for example only the first user device 106A possesses functionality for distinguishing the first user's speech from ambient noise. Alternatively, the first user device 106A may transmit the audio detected at the first user device 106A to the second user device 106B, for processing at the second user device 106B. As described above, this may occur when, for example, the first user device 106A has insufficient processing resources available for processing the audio detected at the first user device 106A.

The first user device 106A may ensure that the call is only transferred to the second user device 106B if the parameter associated with the second user device 106B exceeds the parameter generated at the first user device 106A by an amount that is larger than a threshold difference. This ensures that small changes in the relative loudness of the first user's voice detected at the first and second user devices does not cause the call to be transferred back and forth between the two user devices. In a specific example to illustrate this, the parameter associated with the second user device 106B may be required to be 20% larger than the parameter generated at the first user device 106A, before the call is transferred from the first user device 106A to the second user device 106B.

In some examples, the first and second user devices each determine their own respective parameter and transmit it to the other user device via the local wireless connection 112. The first user device 106A may be configured to transfer the call to the second user device 106B if both the first user device 106A and the second user device 106B detect the first user's speech as being loudest at the second user device 106B. This may be useful where, e.g. one of the user devices is able to distinguish the user's speech from ambient noise with greater accuracy. By using two measurements, the transfer decision can be made with greater confidence. Generally, the transfer of the call from the first user device 106A to the second user device 106B may be instigated by the first user device 106A or the second user device 106B or both user devices.

The first user device 106A may also be configured to use an additional criterion for determining whether an ongoing call is to be transferred from the first user device 106A to the second user device 106B. This additional criterion may involve determining whether the second user device 106B has been moved closer towards the first user's mouth or ears. The first user device 106A may check this criterion based on motion data received from the second user device 106B via the local wireless connection 112. This may involve, for example, determining whether the second user device 106B has been moved through a distance and / or angle that exceeds a threshold distance and / or angle. The threshold distance and / or angle may for example correspond to a motion that would be expected if the first user 102 were to bring the second user device 106B to mouth or ear level.

In a specific example, the first user 102 may wish to transfer an ongoing call from their smartwatch device to their smartphone. To do this, the first user 102 moves their smartphone up to their ear and continues their conversation, but into the microphone(s) of the smartphone. The user's speech will be detected as being louder at the smartphone than at the smartwatch device. The smartphone itself will also be detected as having been moved, i.e. based on the motion detected by the smartphone's motion sensor(s). In some examples, the smartwatch may be detected as having been moved away from the user's mouth, based on detected movement of the smartwatch. In response to this, the call is transferred from the smartwatch to the smartphone. The smartphone may be configured to output audio using an ear speaker, rather than an ambient or loudspeaker. This allows the user to continue their conversation in a more private manner than would otherwise be possible using the smartwatch device. The smartphone may be configured to select an ear speaker over a loudspeaker based on e.g. an orientation that the smartphone is detected as being held in.

In some examples, the first user device 106A also receives an indication of whether the second user device 106B is currently in a lock screen mode. This indication can be used by the first user device 106A to determine whether or not it would be appropriate to transfer the call from the first user device 106A to the second user device 106B. For example, it may not be appropriate to transfer the call to the second user device 106B if the second user device 106B is currently being used by the user 102 to perform some other operation. In some examples, the indication may indicate whether an image is currently being displayed at the second user device 106B. For example, many smartphones and the like turn off the display screen to save power during a call and when the smartphone is held close to the user's ear. This can be detected in some examples as an additional criterion that transfer of the call to the smartphone is desired.

Figure 2 schematically shows a close up view of the first user device 106A and the second user device 106B shown in Figure 1. The first user device 106A has a communication interface 202A and the second user device 106B has a communication interface 202B. The respective communication interfaces 202A, 202B enable the first user device 106A and second user device 106B to exchange data directly via a wireless connection 112. The wireless connection 112 is considered to be a local, direct connection between the first user device 106A and second user device 106B in that an intermediate device is not required to establish the connection. The wireless connection 112 may be established according to one of a plurality of wireless technologies. These may include, for example, Bluetooth, WiFi, Zigbee, infrared, etc. Generally, the first user device 106A and second user device 106B are able to establish a local wireless connection 112 if they are in relatively close proximity to one another, for example within practical range of the local wireless technology used. In Figure 2, the first user device 106A is shown as displaying a phone icon to indicate that a call is currently being conducted with the first user device 106A. The second user device 106B may not be in use and may be showing a blank screen, indicating that it is currently locked. The first user device 106A is shown as having one or more microphones 204A and one or more speakers 206A. Similarly, the second user device 106B is shown as having one or more microphones 204B and one or more speakers 206B.

It will be appreciated that, in some examples, the second user device 106B may be connected to an external microphone. For example, the second user device 106B may be connected to an external microphone via a wired or wireless connection. The external microphone may form part of a headset (i.e. a combination of a microphone and a pair of headphones) that is connected to the second user device 106B via the wired or wireless connection. In some examples, the headset may be wirelessly connected to the second user device 106B via a Bluetooth connection. The audio detected at the microphone of the headset may be used to perform a measurement of the user's speech detected at the second user device 106B, and this measurement may be transmitted to the communication interface 202A of the first user device 106A. It will be appreciated that the first user device 106A may also be connected to an external microphone (via a corresponding wired or wireless connection) and that this microphone may be used to generate a measurement of the user's speech detected at the first user device 106A. While the first user device 106A has been described above as a generic user device, it will be appreciated the first user device 106A comprises certain components. These components may include at least one or more of: microphone 204A, processor, memory, communication interface 202A, speaker 206A and (optionally) a motion sensor. The at least one microphone is arranged to provide an audio input to the at least one processor. The at least one processor is configured to execute computer program instructions stored in memory. The execution of these computer program instructions determines whether a call is to be transferred or not. The communication interface 202A is configured to exchange data with the second user device 106B via a local wireless connection 112. The communication interface 202A is configured to provide data received from the second user device 106B as an input to the at least one processor. The at least one processor is also configured to generate data and cause the generated data to be transmitted to the second user device 106B, via the communication interface 202A.

The at least one motion sensor is arranged to detect motion of the first user device 106A and to provide an indication of this as an input to the at least one processor. The at least one motion sensor may comprise an accelerometer, a GPS sensor, etc. The at least one speaker 206A is configured to generate an audio output based on audio data received from the third party user device (i.e. the remote user device). The audio data received from the remote user device may be received via a separate communication interface (not shown) to communication interface 202A. It will be appreciated that this separate communication interface may also be used to transmit audio data received via the microphone 204A at the to the remote user device.

The other communication interface (not shown) may be used to cause the call to be transferred from the first user device 106A to the second user device 106B. As mentioned earlier, the call may be conducted with the third user device 108 using a cellular network. In some examples, the first user device 106A may cause the call to be transferred to the second user device 106B by transmitting a signal to a base station 114. The signal transmitted from the first user device 106A may include, for example, an identifier of the second user device 106B, such as a SIM number. The base station 114 or some other controller of the cellular network may use this information to cause the call with the third user device 108 to be handed over to the second user device 106B. In Figure 1, a base station 114 is also shown schematically at far-end (i.e. associated with the remote user).

It will be appreciated that, whilst the examples described above have predominantly described from the perspective of the first user device 106A, the same operations may be performed by corresponding components at the second user device 106B.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of transferring a call from a first user device (106A) to a second user device (106B), the call initially being conducted between the first user device (106A) and a third user device (108), the method comprising:
detecting a user's speech at the first user device (106A);
detecting the user's speech at the second user device (106B);
determining whether the user's speech is detected as loudest at the first user device (106A) or the second user device (106B); and
if the user's speech is detected as loudest at the second user device (106B), causing the call to be transferred from the first user device (106A) to the second user device (106B) such that the call with the third user device (108) is continued between the second user device (106B) and the third user device (108).

2. A method according to claim 1, wherein determining whether the user's speech is detected as loudest at the first user device (106A) or the second user device (106B) comprises determining an amplitude of the user's speech detected at the first user device (106A) relative to ambient noise detected at the first user device (106A) and determining an amplitude of the user's speech detected at the second user device (106B) relative to ambient noise detected at the second user device (106B).

3. A method according to claim 2, wherein the user's speech is determined as loudest at the second user device (106B) if the difference between the amplitude of the user's speech detected at the second user device (106B) relative to the ambient noise detected at the second user device (106B) and the amplitude of the user's speech detected at the first user device (106A) relative to the ambient noise detected at the first user device (106A) is greater than a threshold difference.

4. A method according to any of claims 1 to 3, comprising:
transmitting a sample of the user's speech from the first user device (106A) to the second user device (106B);
wherein the detecting the user's speech at the second user device (106B) is based on the sample of the user's speech received from the first user device (106A).

5. A method according to any of claims 1 to 4, comprising:
detecting movement of the second user device (106B); and
transferring the call from the first user device (106A) to the second user device (106B) based on the detected movement of the second user device (106B) and the user's speech being detected as loudest at the second user device (106B).

6. A method according to claim 5, comprising transferring the call from the first user device (106A) to the second user device (106B) if the second user device (106B) is detected as having been moved close to the user's ear or mouth.

7. A method according to any of claims 1 to 6, wherein one of the first user device (106A) and the second user device (106B) comprises a smartwatch device and the other of the first user device (106A) and the second user device (106B) comprises a portable mobile device.

8. A method according to any of claims 1 to 7, wherein detecting the user's speech at the second user device (106B) comprises detecting the user's speech at an external microphone that is connected to the second user device (106B) via a wired or wireless connection.

9. A user device (106A) for conducting a call with a third party user device (108), the user device (106A) comprising:
a microphone;
a communication interface (202A) configured to establish a local wireless connection (112) with a second user device (106B) and to receive a measurement of the user's speech detected at the second user device (106B) via the wireless connection (112); and
a processor configured to:
generate a measurement of the user's speech received via the microphone;
receive a measurement of the user's speech from the second user device (106B); and
if the user's speech is detected as loudest at the second user device (106B), transfer the call to the second user device (106B) to enable the call with the third user device (108) to be continued between second the user device (106B) and the third user device (108).

10. A user device (106A) according to claim 9, wherein the processor is configured to:
determine a frequency response of the user's voice; and
cause the frequency response to be transmitted to the second user device (106B) as voice information via the local wireless connection (112) to enable the second user device (106B) to distinguish the user's speech from ambient noise.

11. A user device (106A) according to claim 9 or claim 10, wherein the communication interface (202A) is arranged to receive a measurement comprising an amplitude of the user's speech detected at the second user device (106B) relative to ambient noise detected at the second user device (106B); and
the processor is configured to:
generate a measurement of the user's speech by determining an amplitude of the user's speech received via the microphone relative to ambient noise received via the microphone; and
detect the user's speech as being loudest at the second user device (106B) if the difference between the amplitude of the user's speech detected at the second user device (106B) relative to ambient noise detected at the second user device (106B) and the amplitude of the user's speech received via the microphone relative to ambient noise received via the microphone is greater than a threshold difference.

12. A user device (106A) according to any of claims 9 to 11, wherein the communication interface (202A) is arranged to receive motion data from the second user device (106B), the motion data indicating a detected motion of the second user device (106B) and
wherein the processor is configured to cause the call to be transferred from the user device (106A) to the second user device (106B) if the second user device (106B) is detected as being moved close to the user's ear or mouth.

13. A user device according to any of claims 9 to 12, wherein the communication interface (202A) is configured to establish a local wireless connection with the second user device (106B) via at least one of Bluetooth, Wi-Fi, infrared and ZigBee.

14. A user device according to any of claims 9 to 13, wherein the communication interface (202A) is configured to receive a measurement of the user's speech detected at an external microphone that is connected to the second user device via a wired or wireless connection.

15. A computer program comprising program code means which when executed by a computing device (106A) implement the steps according to the method of any of claims 1 to 8.
